Europäisches Patentamt

European Patent Office

Office européen des brevets

(11) Numéro de publication: **0 019 590**
**B1**

(12) **FASCICULE DE BREVET EUROPEEN**

(45) Date de publication du fascicule du brevet: **13.04.83**

(51) Int. Cl.³: **A 61 C 13/26**

(21) Numéro de dépôt: **80810156.2**

(22) Date de dépôt: **08.05.80**

(54) **Attache pour prothèse dentaire.**

(30) Priorité: **09.05.79 IT 2248579**

(43) Date de publication de la demande:
**26.11.80 Bulletin 80/24**

(45) Mention de la délivrance du brevet:
**13.04.83 Bulletin 83/15**

(84) Etats contractants désignés:
**BE CH DE FR GB LI LU NL**

(56) Documents cités:
**IT - A - 1 007 101**

(73) Titulaire: **Métaux Précieux S.A.**
**2, avenue du Vignoble**
**CH-2000 Neuchâtel/NE (CH)**

(72) Inventeur: **Romagnoli, Mario**
**Via Fontana, 16**
**I-20122 Milano (IT)**

(74) Mandataire: **Bovard, Fritz Albert et al,**
**Bovard & Cie Ingénieurs- Conseils ACP et Avocats**
**Optingenstrasse 16**
**CH-3000 Berne 25 (CH)**

Courier Press, Leamington Spa, England.

Attache pour prothèse dentaire

La présente invention a pour objet une attache pour prothèse dentaire amovible, comprenant une partie mâle, une partie femelle s'engageant sur la partie mâle et un dispositif de liaison des dites parties l'une à l'autre comportant lui-même, d'une part, un organe coulissant incorporé à la partie femelle et mobile transversalement par rapport à l'axe de cette partie et d'autre part, une rainure transversale ménagée dans la partie mâle, ledit organe coulissant s'engageant dans ladite rainure pour bloquer les dites parties.

Il est connu depuis longtemps de fixer une embase à une couronne ou à un autre élément solidaire d'une dent saine et de prévoir, attenante à la prothèse, une partie creuse dont le logement correspond, en forme et dimensions, avec l'embase et peut s'engager sur elle pour amener la prothèse en place. Ainsi, par exemple, le brevet allemand No DE—A— 336 898, le brevet américain No US—A— 3 427 718 et le brevet italien No I—A— 1 007 101 décrivent des attaches dentaires dans lesquelles l'embase a une forme pyramidale ou parallélépipédique. Selon l'enseignement du brevet allement 336 898, la prothèse est fixée au moyen d'une tige filetée ou d'une vis qui presse la prothèse contre l'embase dans le sens axial, c'est-à-dire en direction de la mâchoire. Dans la brevet US— A—3 427 718, les moyens de fixation consistent en un certain nombre de tiges qui s'engagent dans des trous correspondants, également dirigés axialement, le blocage étant réalisé par pression latérale. Selon le brevet italien 1 007 101, la partie de l'attache, qui est solidaire de la dentition restante et qui forme l'embase s'engageant dans un logement de la prothèse, présente une échancrure en forme de L débouchant dans une des parois planes de l'embase pyramidale et dans laquelle s'engage un organe coulissant monté sur la prothèse et sollicité par un ressort.

Ce dernier système présente par rapport aux systèmes antérieurs connus l'avantage de ne pas exiger la mise en place d'une vis ou d'un écrou et la manoeuvre de cette pièce au moment de la fixation de la prothèse. Il évite également les phénomènes d'usure des vis et des écrous qui, dans les systèmes antérieurs, se manifestaient d'une façon gênante. Avec le système selon le brevet italien susmentionné, il suffit de presser la prothèse sur l'embase solidaire de la dentition restante et, par un crochement élastique, elle est maintenue en place.

Il s'est avéré toutefois à l'usage que ce système présentait encore des inconvénients en ce sens que l'embase pyramidale qui devait être exactement ajustée à la cavité de la partie femelle de l'attache, solidaire de la prothèse, pouvait également être sujette à l'usure, de sorte que le serrage de la prothèse sur son embase n'était plus garanti après quelques manipulations.

Le but de la présente invention est ainsi de perfectionner le système connu par le brevet italien 1 007 101 de façon à assurer l'assise de la prothèse sans aucun jeu tout en évitant l'emploi de vis ou d'autres éléments de serrage nécessitant une manoeuvre au moment de la mise en place.

Dans ce but, l'attache pour prothèse dentaire selon l'invention, du genre mentionné au début, est caractérisée en ce que les dites parties mâle et femelle sont tronconiques et complémentaires et en ce que ledit organe coulissant et ladite rainure transversale sont cylindriques et disposés coaxialement l'un à l'autre lorsque la prothèse est en place.

On va décrire ci-après, à titre d'exemple, une forme d'exécution de l'objet de l'invention en se référant au dessin annexé dont

la fig. 1 est une vue schématique en perspective montrant une dentition, dans laquelle est insérée une prothèse comportant trois dents et pourvue d'une attache selon l'invention,

la fig. 2 est une vue en perspective fortement agrandie et schématisée montrant une couronne fixée sur un pilier naturel et la partie fixe de l'attache fixée sur cette couronne,

la fig. 3 est une vue analogue à la fig. 2 montrant en outre la partie mobile de l'attache. mise en place sur la partie fixe, la prothèse n'étant pas représentée,

la fig. 4 est une vue, également à échelle agrandie, montrant l'attache en perspective et

la fig. 5 est une vue en perspective éclatée montrant les mêmes éléments qu'à la fig. 4, ces éléments étant toutefois représentés en dehors de leur position normale lorsque l'attache est assemblée.

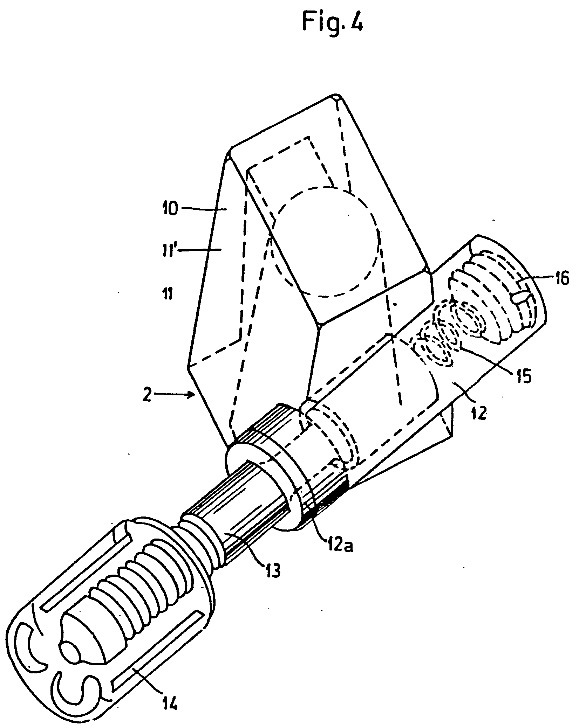

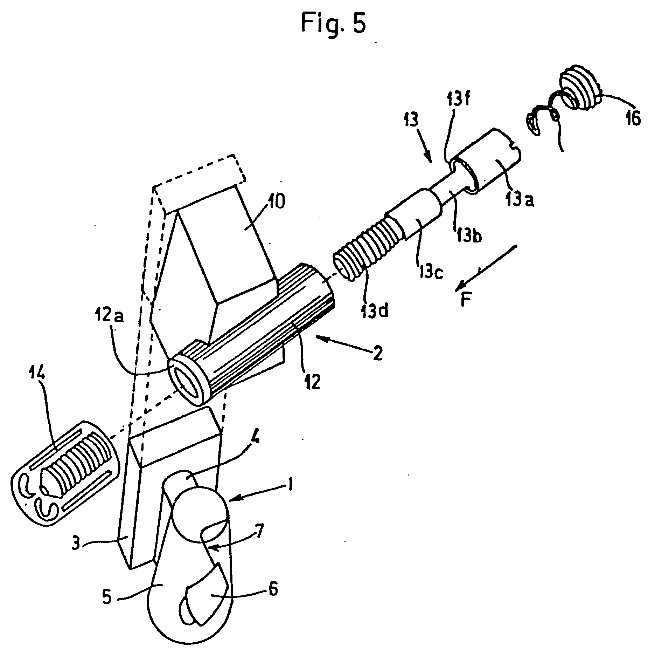

Comme on le voit le mieux possible aux fig. 4 et 5, l'attache dentaire décrite ici comporte une partie mâle 1, destinée à constituer la partie fixe solidaire de la dentition restante du patient, et une partie femelle 2 qui fait partie de la prothèse.

La partie mâle 1 comprend de son côté une embase 3, en forme de plaque, servant à l'ancrage sur la dentition existante. Par exemple, cette plaque de base est fixée par soudage sur la couronne métallique qui revêt et protège une des dents du patient. A partir de cette emse 3 s'étend un élément transversal 4, relativement rigide, qui soutient le corps 5 en forme de tronc de cône constituant la partie mâle proprement dite de l'attache.

Le corps tronconique 5 s'étend parallèlement à l'embase 3 et présente, sur son côté opposé à cette embase, une rainure transversale 6 en forme de segment cylindrique dont la fonction sera décrite plus loin.

Une seconde rainure 7 est également formée sur la paroi latérale du corps 5. Cette seconde rainure s'étend légèrement en oblique par rapport à l'axe vertical du tronc de cône 5 et intercepte au moins partiellement la rainure 6. La fonction de cette seconde rainure 7 sera également expliquée plus loin.

La partie femelle de l'attache décrite ici comprend un bloc 10 (fig. 4) à l'intérieur duquel est formée une cavité 11, ouverte à la base du bloc, et dont la forme est tronconique, ses dimensions étant ajustées à celles de la partie mâle 5. Le logement tronconique 11 communique par un passage 11', également ménagé dans le bloc 10. avec la surface arrière de ce dernier. Ce passage 11' a des dimensions qui correspondent à celles de l'élément transversal 4 de la partie fixe 1 de façon à ce qu'il puisse s'engager sur cet élément transversal.

Sur la face avant du bloc 10 est fixé un manchon cylindrique 12, de forme tubulaire, à l'intérieur duquel est monté un organe coulissant de forme cylindrique 13 constitué comme une tige filetée. La disposition de cette tige filetée 13 sera décrite plus loin. Auparavant il convient de préciser que l'âme du manchon tubulaire 12 est agencé de façon à être en communication avec la cavité tronconique 11 du bloc 10, et cela de telle façon que, lorsque la partie mâle est engagée dans le logement tronconique, la surface de la rainure 6 prolonge celle du bloc 10 de façon â constituer un élément de paroi du manchon cylindrique 12.

La tige coulissante 13 comporte essentiellement trois parties dont la partie principale 13a a un diamètre qui correspond à celui de l'âme interne du manchon 12. Cette partie 13a est suivie d'une partie centrale 13b dont le diamètre est sensiblement réduit. Finalement, à l'autre extrémité de l'organe 13 se trouve une partie 13c dont le diamètre est légèrement plus petit que celui de la partie 13a et qui se termine par un filetage 13d (voir fig. 5).

La tige coulissante 13 est introduite à l'intérieur du manchon 12 dans le sens de la flèche F, représentée à la fig. 5, jusqu'à ce que son extrémité filetée 13d sorte à l'extrémité opposée du manchon. La partie extrême 13c est guidée par un épaulement de retenue annulaire 12a dont le diamètre interne est légèrement inférieur au diamètre de la cavité cylindrique de manchon 12. Sur l'extrémité ainsi saillante 13d de l'organe coulissant 13 se fixe en embout à filetage intérieur, désigné par 14, et servant à modifier la position de l'organe 13. A l'autre extrémité de la tige 13, est introduit un ressort de pression 15 qui vient s'appuyer sur la face extrême de l'organe 13, qui s'engage dans l'âme du manchon 12 et qui est maintenu en place et armé par un élément d'extrémité, en forme de bouchon 16, vissé dans un taraudage du manchon 12. Le ressort 15 presse donc l'organe 13 axialement à l'intérieur du manchon 12 et fait appuyer son épaulement 13f, qui limite la partie 13a, contre un épaulement annulaire correspondant 12a du manchon 12. De cette manière, la partie 13a de l'organe coulissant 13 se trouve maintenu exactement en regard du bloc 10, de sorte qu'elle pénètre dans la rainure transversale 6 de la partie mâle si cette dernière est engagée à l'intérieur du tronc de cône 11. On voit clairement à la fig. 4 la disposition relative de ces pièces.

Si maintenant on presse sur l'embout 14, dans le sens opposé à l'action du ressort 15, l'organe coulissant se déplace dans le manchon 12 jusqu'à ce que sa partie 13b, de diamètre réduit, se trouve en regard du logement 11. La conséquence de cette disposition sera décrite ci-après.

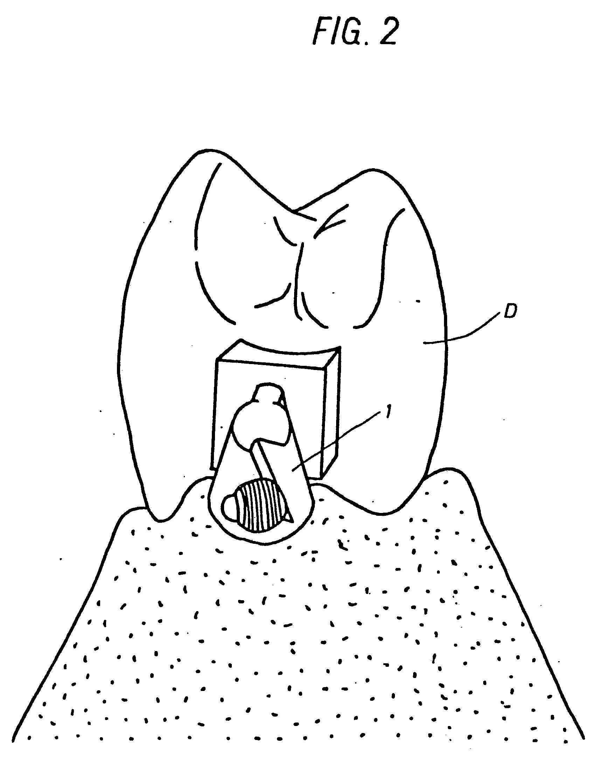

A la fig. 2, on voit la partie fixe 1 avec l'élément mâle en forme de tronc de cône 5, fixée sur une dent existante D, la partie mâle 5 étant située du côté distal dans la zone qui devra être occupée par la prothèse. Pour effectuer la fixation de la dite partie 1, on procède façon usuelle, par exemple, en soudant la plaque de base 3 de la partie fixe sur la capsule de protection (couronne) qui revêt la dent D, ou sur une coiffe radiculaire ou encore sur une barre.

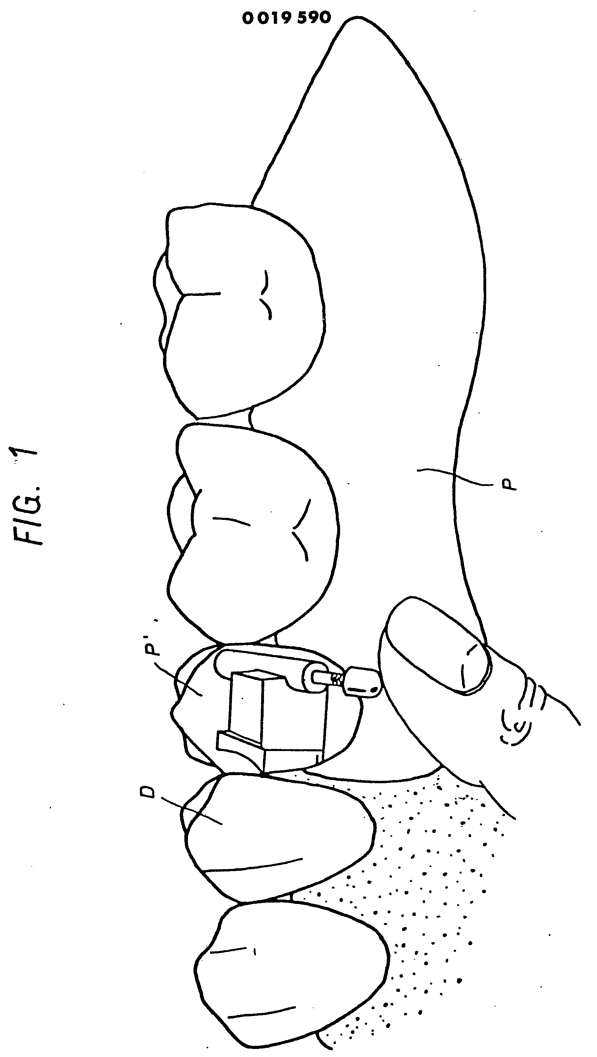

De même, la partie femelle de l'attache décrite sera incorporée à la prothèse P qui est représentée à la fig. 1 et qui n'est pas représentée du tout à la fig. 2. On prendra soin cependant, en montant cette partie femelle, que l'embout 14 qui sert de moyen d'actionnement s'étende encore en saillie hors de la prothèse du côté buccal et soit par conséquent accessible.

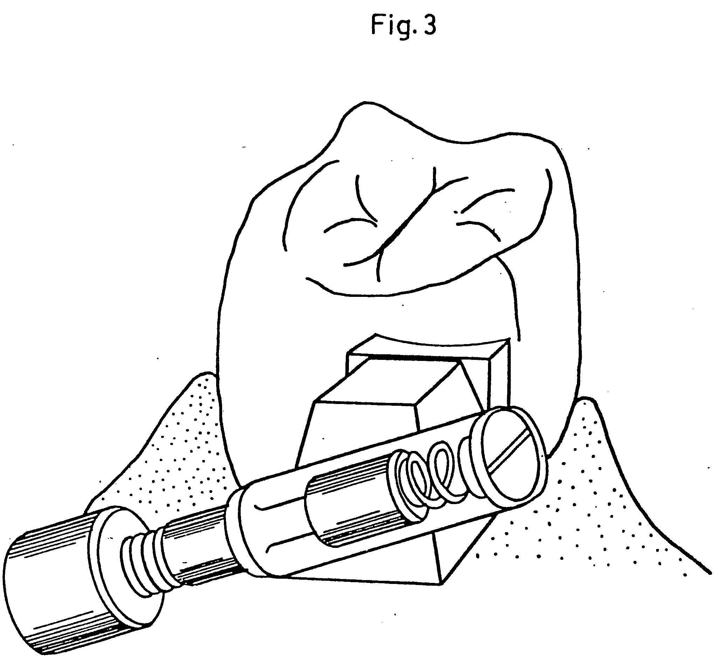

Pour effectuer le montage de la prothèse, comme on le voit aux fig. 1 et 3, le logement tronconique 11 s'engage avec précision sur la partie mâle 5, ce qui assure le placement de la prothèse dans une position correcte et la stabilise parfaitement. Dans cette position de montage, la partie 13a de la tige coulissante est ajustée de façon à s'engager partiellement dans le logement 11 et dans la rainure 6 de la partie mâle 5, de sorte que cette partie renforcée 13a joue le rôle d'un moyen de retenue de la prothèse et la maintient en place contre tout effort susceptible de provoquer le déplacement de la prothèse vers le haut.

Pour dégager la prothèse, il suffit de presser sur l'embout 14, de façon à amener la partie amincie 13b de l'organe coulissant 13 en correspondance ave le logement 11, c'est-à-dire en correspondance avec la rainure 6. Dans cette position, plus rien ne retient la partie femmelle à la partie mâle 5 puisque la rainure 6 est entièrement dégagée de sorte que la prothèse peut être déplacée librement vers le haut, c'est-à-dire dans l'axe des troncs de cône correspondants de la partie fixe et de la partie mobile.

On décrira encore le mouvement de mise en place de la prothèse: Il suffit d'amener le logement 11 à s'engager partiellement sur le corps tronconique 5 puis de presser pa prothèse vers le bas. Au cours de ce mouvement, l'épaulement 13f de la partie 13a de l'organe coulissant s'engage dans la rainure oblique 7, laquelle joue le rôle d'une rampe inclinée et provoque par conséquent le déplacement de la tige 13 vers l'extrémité du manchon 12 contre l'action du ressort 15 au fur et à mesure que la partie femelle se déplace vers la base du cône et s'engage sur la partie mâle 5. Lorsque la partie femelle a atteint sa position définitive dans laquelle l'axe de l'organe coulissant 13 coïncide avec l'axe de la rainure cylindrique 6, l'organe coulissant 13 est libre de se déplacer vers l'avant sous l'action du ressort 15 et sa partie de diamètre maximale 13a s'engage dans la rainure 6 et assure le blocage des deux pièces l'une par rapport à l'autre.

Le manchon cylindrique 12, avec l'organe coulissant 13, et la rainure 6 sont, dans la forme d'exécution décrite, disposés transversalement par rapport à l'axe vertical de l'attache dentaire. Toutefois, comme le montrent les fig. 3 et 4, il est préférable que ces deux éléments soient disposés avec leur axe commun légèrement oblique par rapport à l'horizontale de façon que l'emplacement de l'embout 14 soit auss près que possible de la gencive et par conséquent risque moins de perturber le patient.

Dans la description qui précède, on a toujours utilisé les termes "vers le haut" et "vers le bas". Ces expressions se rapportent à une application du dispositif décrit dans le cas où il sert à fixer une prothèse sur la partie maxillaire inférieure de la dentition d'un patient. Cependant, il est évident que cette terminologie sera modifiée s'il s'agit d'une attache prévue pour une prothèse destinée à la partie maxillaire supérieure de la mâchoire.

Par ailleurs, bien que l'on ait décrit l'attache représentée au dessin en montrant que la partie femelle de l'attache est associée à la prothèse et la partie mâle est associée à la dentition restante, rien n'empêche que cette dispositif soit inversée.

## Revendications

1. Attache pour prothèse dentaire amovible, comprenant une partie mâle (1), une partie femelle (10) s'engageant sur la partie mâle et un dispositif de liaison des dites parties l'une à l'autre comportant lui-même, d'une part une organe coulissant (13) incorporé à la partie femelle et mobile transversalement par rapport à l'axe de cette partie et d'autre part, une rainure transversale (6) ménagée dans la partie mâle (1), ledit organe coulissant s'engageant dans ladite rainure pour bloquer les dites parties, caractérisée en ce que les dites parties mâle et femelle sont tronconiques et complémentaires et en ce que ledit organe coulissant et ladite rainure transversale sont cylindriques et disposés coaxialement l'un à l'autre lorsque la prothèse est en place.

2. Attache selon la revendication 1, caractérisée en ce que l'axe dudit organe coulissant est incliné par rapport à un plan perpendiculaire à l'axe commun des dites parties mâle et femelle.

3. Attache selon l'une quelconque des revendications précédentes, caractérisée en ce que ledit organe coulissant (13) comporte au moins un segment de section réduite (13b) et un segment de section élargie (13a) ce dernier étant destiné à remplir la fonction de blocage quand il est introduit dans la rainure (6).

4. Attache selon l'une quelconque des revendications précédentes, caractérisée en ce que ledit organe coulissant (13) est logé dans un manchon tubulaire (12) solidaire de la partie femelle (10).

5. Attache selon la revendication 4, caractérisée en ce que le dit organe coulissant est maintenu appuyé sur un siège (12a) du dit manchon tubulaire par un ressort (15) agissant dans le sens de l'axe du dit manchon.

6. Attache selon la revendication 5, caractérisé en ce que le dit ressort s'appuie sur un couvercle amovible (16) fixé normalement à une extrémité du manchon tubulaire.

7. Attache selon l'une quelconque des revendications précédentes, caractérisée en ce que la dite partie mâle présente outre la dite rainure transversale (6) une seconde rainure (7) légèrement inclinée par rapport à l'axe de la partie conique de façon à constituer une surface de guidage qui déplace le dit organe coulissant (13) lors de la mise en place de la prothèse.

## Patentansprüche

1. Befestigung für eine wegnehmbare Zahnprothese, mit einem männlichen Teil (1), einem weiblichen Teil (10), der auf den männlichen Teil aufsetzbar ist, und einer Vorrichtung zur Verbindung der besagten Teile, welche Vorrichtung ihrerseits mit einem Schiebeteil (13), welcher dem weiblichen Teil einverleibt ist und quer zur Achse dieses Teiles beweglich ist, eine Quernut (6) hat, welche im männlichen Teil (1) eingearbeitet ist, wobei der Schiebeteil in diese Nut eingreift um die besagten Teile zu blockieren, dadurch gekennzeichnet, dass der besagte männliche Teil und der besagte weibliche Teil kegelstumpfförmig und zueinander komplementär sind, und dass der besagte Schiebeteil und die besagte Quernut zylindrisch sind und koaxial zueinander angeordnet sind wenn die Prothese eingesetzt ist.

2. Befestigung nach Anspruch 1, dadurch gekennzeichnet, dass die Achse des besagten Schiebeteiles zu einer Ebene geneigt ist, die im rechten Winkel zur gemeinsamen Achse des männlichen und des weiblichen Teiles sich erstreckt.

3. Befestigung nach einem der vorhergehenden Ansprüche, dadurch gekennzeichnet, dass der besagte Schiebeteil (13) mindestens ein Segment von reduziertem Querschnitt (13b) und ein Segment von vergrössertem Querschnitt (13a) hat, wobei letzteres dazu bestimmt ist, die Blockierfunktion zu erfüllen, wenn es in die Nut (6) eingeführt ist.

4. Befestigung nach einem der vorhergehenden Ansprüche, dadurch gekennzeichnet, dass der besagte Schiebeteil (13) in einer rohrförmigen Hülse (12) untergebracht ist, die am weiblichen Teil (10) festsitzt.

5. Befestigung nach Anspruch 4, dadurch gekennzeichnet, dass der besagte Schiebeteil auf einem Sitz (12a) der besagten rohrförmigen Hülse angedrückt gehalten ist durch eine Feder (15), welcher in der Achsrichtung der besagten Hülse wirksam ist.

6. Befestigung nach Anspruch 5, dadurch gekennzeichnet, dass die besagte Feder sich auf einem wegnehmbaren Deckel (16) abstützt, der normalerweise an einem Ende der rohrförmigen Hülse angebracht ist.

7. Befestigung nach einem der vorhergehenden Ansprüche, dadurch gekennzeichnet, dass der besagte männliche Teil nebst der besagten Quernut (6) eine zweite Nut (7) besitzt, die inbezug auf die Achse des kegeligen Teiles geringfügig geneigt ist, derart, dass sie ein Führungsfläche bietet, welche den besagten Schiebeteil (13) verstellt, anlässlich des Aufsetzens der Prothese.

## Claims

1. Fastening for removable dental prosthesis, including a male part (1), a female part (10) fitting on the male part, and a device for joining the said parts to one another, itself comprising, on the one hand, a sliding component (13) incorporated in the female part and movable transversely relative to the axis of this part and, on the other hand, a transverse groove (6) contrived in the male part (1), said sliding component fitting in said groove for locking the said parts, characterized in that the said male and female parts are frustoconical and complementary, and in that said sliding component and said transverse groove are cylindrical and disposed coaxially with one another when the prosthesis is in place.

2. Fastening according to claim 1, characterized in that the axis of said sliding component is inclined relative to a plane perpendicular to the common axis of the said male and female parts.

3. Fastening according to any one of the preceding claims, characterized in that said sliding component (13) comprises at least one segment of reduced cross-section (13b) and a segment of enlarged cross-section (13a), the latter being intended to fulfill the blocking function when it is introduced into the groove (6).

4. Fastening according to any one of the preceding claims, characterized in that said sliding component (13) is seated in a tubular sleeve (12) integral with the female part (10).

5. Fastening according to claim 4, characterized in that the said sliding component is held pressed against a seat (12a) of the said tubular sleeve by a spring (15) acting in the direction of the axis of the said sleeve.

6. Fastening according to claim 5, characterized in that the said spring rests against a removable cover (16) normally fixed to one end of the tubular sleeve.

7. Fastening according to any one of the preceding claims, characterized in that the said male part exhibits, besides the said transverse groove (6), a second groove (7) slightly inclined relative to the axis of the conical part so as to constitute a guide surface which displaces the said sliding component (13) when the prosthesis is put in place.

# FIG. 1

# FIG. 2

Fig. 3

Fig. 4

0 019 590

4

# Fig. 5